# EUROPEAN PATENT APPLICATION

(11) **EP 4 220 750 A1**
(43) Date of publication of application: **02.08.2023**
(21) Application number: 21872841.8
(22) Date of filing: 16.09.2021
(51) Int. Cl.: H01M 4/13, H01M 4/66, H01M 10/42, H01M 4/62, H01M 10/058, H01M 10/052, H01M 10/0562, H01M 10/0565

(54) **SOLID-STATE BATTERY ANODE COMPRISING POLYMER LAYER FOR PREVENTING MICRO-SHORT CIRCUIT, AND SOLID-STATE BATTERY COMPRISING SAME**

(30) Priority: 23.09.2020 KR 20200123098; 08.10.2020 KR 20200130623
(71) Applicant: LG Energy Solution, Ltd., Seoul 07335 (KR)
(72) Inventor: LEE, Jung Pil, Daejeon 34122 (KR); JUNG, Hye Ri, Daejeon 34122 (KR); CHO, Sung Ju, Daejeon 34122 (KR); KIM, Sul Cham, Daejeon 34122 (KR)
(74) Representative: Goddar, Heinz J.
(86) International application number: PCT/KR2021/012742
(87) International publication number: WO 2022/065813

(57) **Abstract**

The present invention relates to a negative electrode for all-solid-state batteries including a polymer layer configured to prevent microscopic short circuit and an all-solid-state battery including the same, and more particularly to a negative electrode for lithium secondary batteries configured such that the negative electrode has a coating layer located on at least one surface of a negative electrode current collector, the coating layer having ionic conductivity and electrical conductivity, such that lithium dendrites are formed between the coating layer and the negative electrode current collector, thereby preventing microscopic short circuit, and an all-solid-state battery including the same.

## Description

### [Technical Field]

This application claims the benefit of priority to Korean Patent Application No. 2020-0123098 filed on September 23, 2020 and Korean Patent Application No. 2020-0130623 filed on October 8, 2020, the disclosures of which are incorporated herein by reference in their entireties.

The present invention relates to a negative electrode for all-solid-state batteries including a polymer layer configured to prevent microscopic short circuit and an all-solid-state battery including the same. More particularly, the present invention relates to a negative electrode for all-solid-state batteries, the negative electrode including a negative electrode current collector and a coating layer disposed on at least one surface of the negative electrode current collector, wherein the coating layer has ionic conductivity and electrical conductivity, and the coating layer includes a mixture of a polymer and a metal or a polymer having ionic conductivity as a constituent thereof, and an all-solid-state battery including the same.

### [Background Art]

A lithium secondary battery, which has high energy density, a low self-discharge rate, and a long lifespan, is used for various high-capacity batteries. The lithium secondary battery has a problem in that a separator interposed between a positive electrode and a negative electrode is damaged or the volume of the battery is increased by lithium dendrites generated at the time of charging and discharging.

In order to solve a safety-related problem caused by leakage of a liquid electrolyte or overheating, an all-solid-state battery is presented as an alternative. Unlike the lithium secondary battery, the all-solid-state battery has a solid electrolyte layer including a solid electrolyte, and the solid electrolyte layer is disposed between the positive electrode and the negative electrode so as to serve as a separator.

Since the all-solid-state battery uses a solid electrolyte instead of a liquid electrolytic solution used in a conventional battery, evaporation of the electrolytic solution due to a change in temperature or leakage of the electrolytic solution due to external impact does not occur, whereby the all-solid-state battery is safe from explosion or fire. The region of the solid electrolyte that contacts the positive electrode or the negative electrode is limited due to characteristics of a solid, whereby formation of an interface between the positive electrode and the solid electrolyte layer and between the negative electrode and the solid electrolyte layer is not easy.

In the case in which the area of contact between the positive electrode and the solid electrolyte layer and between the negative electrode and the solid electrolyte layer is small, electrical resistance is high and output is reduced. For this reason, the contact area is increased and interfacial resistance is reduced by pressing a unit cell including the solid electrolyte.

If pressing is performed as described above, however, the solid electrolyte layer is damaged due to growth of lithium dendrites, or short circuit occurs due to reaction between the lithium dendrites and the positive electrode.

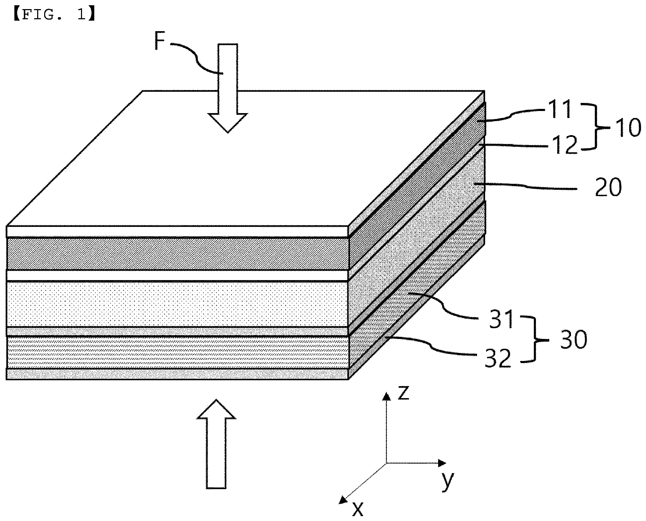

FIG. 1 is a schematic view of a conventional all-solid-state battery.

As can be seen from FIG. 1, the conventional all-solid-state battery includes a positive electrode 10 including a positive electrode current collector 11 and a positive electrode active material layer 12 formed on opposite surfaces of the positive electrode current collector by coating, a separator/solid electrolyte layer 20, and a negative electrode 30 including a negative electrode current collector 31 and a negative electrode active material layer 32 formed on opposite surfaces of the negative electrode current collector by coating.

Unlike FIG. 1, in order to increase the overall capacity of the battery, a negative electrode current collector alone may be used as a negative electrode without a separate negative electrode active material layer 32, or the negative electrode may be used as a lithium plating and stripping mechanism using lithium metal.

In the conventional all-solid-state battery, pressure F is applied to the battery from above and below to reduce interfacial resistance between the solid electrolyte layer 20 and the positive electrode and between the solid electrolyte layer 20 and the negative electrode. When initial charging and discharging are performed, lithium is intercalated into a negative electrode active material, whereby the active material is expanded or the lithium is deposited on the negative electrode, and therefore, the thickness (z-axis) of the all-solid-state battery is increased. As a result, pressure applied to the interior of the all-solid-state battery is also increased. As pressure due to initial charging and discharging is increased, lithium dendrites may easily damage the solid electrolyte layer 20, and the lithium dendrites may react with the positive electrode 10, whereby there is a high possibility of cell short circuit.

In the case in which lithium metal is used in order to increase capacity, the capacity and performance of a unit cell are changed depending on the degree of pressurization or over time, since the lithium metal is soft. As the force F is increased, the solid electrolyte and the lithium metal actively react with each other. As a result, much more lithium metal is introduced into the solid electrolyte layer, and therefore a possibility of short circuit occurring in the all-solid-state battery is increased.

Meanwhile, when the pressure applied to the interior of the all-solid-state battery is too large, the position and shape of the positive electrode, the solid electrolyte layer, and the negative electrode in the all-solid-state battery may be changed. The pressure in the all-solid-state battery may also not be uniform due to lithium non-uniformly deposited on the negative electrode, and therefore a jig that presses the outside of the all-solid-state battery may also be damaged.

In order to solve the above problem, it is necessary to reduce reactivity with the lithium metal or to uniformly distribute or reduce stress in the all-solid-state battery.

In Patent Document 1, a stack constituted by a positive electrode, a solid electrolyte layer, and a negative electrode is pressed in order to improve conductivity, electronic conductivity, and lithium ion conductivity; however, preventing cell short circuit in a unit cell by uniformly distributing or reducing stress applied to an all-solid-state battery is not recognized.

In Patent Document 2, a stack constituted by a positive electrode, a solid electrolyte layer, and a negative electrode is pressed in order to reduce interfacial resistance; however, improving safety of a unit cell by uniformly distributing or reducing stress applied to an all-solid-state battery is not recognized.
Japanese Patent Application Publication No. 2018-181451 (2018.11.15) ("Patent Document 1")
Japanese Patent Application Publication No. 2019-200890 (2019.11.21) ("Patent Document 2")

### [Disclosure]

### [Technical Problem]

The present invention has been made in view of the above problems, and it is an object of the present invention to prevent damage to a solid electrolyte layer due to formation of lithium dendrites and occurrence of short circuit due to contact between the lithium dendrites and a positive electrode.

It is another object of the present invention to uniformly distribute or reduce stress in an all-solid-state battery and to improve ionic conductivity, thereby increasing lifespan of the all-solid-state battery.

### [Technical Solution]

In order to accomplish the above objects, a negative electrode for all-solid-state batteries according to the present invention includes a negative electrode current collector and a coating layer disposed on at least one surface of the negative electrode current collector, wherein the coating layer includes at least one of 1) and 2) below:
1) polymer A having ionic conductivity; and
2) a mixture of i) polymer B and ii) one or more selected from the group consisting of a metal, a salt of the metal, an oxide of the metal, and a hydrate of the metal.

The coating layer may have ionic conductivity.

The coating layer may include a lithiophilic material, and a non-limiting example of the lithiophilic material may include one or more selected from the group consisting of a lithiophilic metal, a salt of the lithiophilic metal, an oxide of the lithiophilic metal, and a hydrate of the lithiophilic metal.

The polymer A may include a lithium ion.

The polymer B may include a functional group including oxygen or nitrogen, the functional group highly compatible with the metal.

The metal may be lithiophilic.

In addition, the coating layer may further comprise a solid electrolyte.

A weight mixing ratio of the polymer A and the polymer B to the lithiophilic material may be 30:70 to 90:10.

The coating layer may have a thickness of 100 nm to 10 µm.

The present invention may be an all-solid-state battery including any one of the negative electrode for all-solid-state batteries according to the above description.

Lithium may be deposited between the coating layer and the negative electrode current collector after initial charging and discharging of the all-solid-state battery.

The coating layer may be disposed so as to face a solid electrolyte layer.

The present invention may be a battery module or a battery pack including the all-solid-state battery. In addition, the present invention may be a device in which the all-solid-state battery is mounted.

In the present invention, one or more constructions that do not conflict with each other may be selected and combined from among the above constructions.

### [Advantageous effects]

As is apparent from the above description, the negative electrode for all-solid-state batteries according to the present invention is configured such that lithium dendrites generated at the negative electrode are formed between the coating layer and the negative electrode current collector, whereby it is possible to prevent damage to the solid electrolyte layer or reaction between the positive electrode and the lithium dendrites. As a result, a short circuit phenomenon in an all-solid-state battery is reduced.

In addition, a polymer is used for the coating layer, whereby it is possible to relieve stress in the all-solid-state battery. Furthermore, the coating layer has ionic conductivity, whereby it is possible to improve safety of the all-solid-state battery while improving performance of the negative electrode.

### [Description of Drawings]

FIG. 1 is a schematic view of a conventional all-solid-state battery.
FIG. 2 is a schematic view of an all-solid-state battery according to the present invention.
FIG. 3 is a schematic view of the all-solid-state battery according to the present invention after being charged and discharged.
FIG. 4 is a SEM photograph of an Ag-PEO/LiTFSI coating layer according to Example 1 of the present invention.
FIG. 5 is a SEM photograph of a coating layer manufactured according to Manufacturing Example 4 (Example 4) of the present invention.
FIG. 6 is a SEM photograph of a coating layer manufactured according to Manufacturing Example 6 (Example 5) of the present invention.
FIG. 7 is a SEM photograph of a coating layer manufactured according to Example 7 of the present invention.
FIG. 8 is a sectional SEM photograph of an all-solid-state battery having the Ag-PEO/LiTFSI coating layer according to Example 1 of the present invention applied thereto after being charged once.
FIG. 9 is a sectional SEM photograph of an all-solid-state battery having the coating layer according to Example 4 of the present invention applied thereto after being charged once.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

In addition, all numeric ranges include the lowest value, the highest value, and all intermediate values therebetween unless the context clearly indicates otherwise.

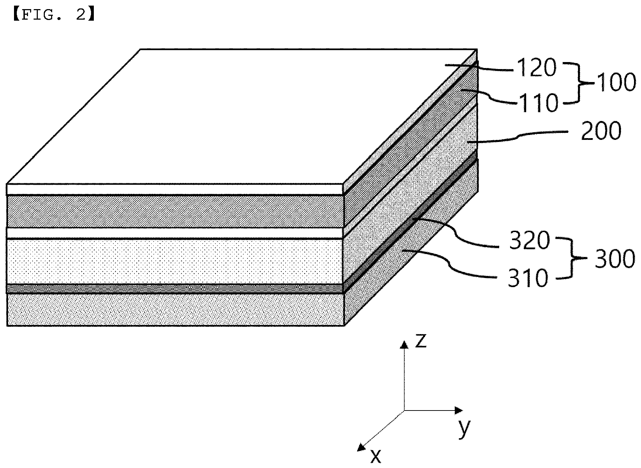

A negative electrode for all-solid-state batteries according to the present invention will be described with reference to a schematic view of the entirety of an all-solid-state battery. FIG. 2 is a schematic view of an all-solid-state battery according to the present invention.

As shown in FIG. 2, the all-solid-state battery according to the present invention includes a positive electrode 100 including a positive electrode current collector 110 and a positive electrode active material layer 120 formed on at least one surface of the positive electrode current collector by coating, a solid electrolyte layer 200, and a negative electrode 300 including a negative electrode current collector 310 and a coating layer 320 disposed on at least one surface of the negative electrode current collector 310. The coating layer 320 may include at least one of 1) and 2) below:
1) polymer A having ionic conductivity; and
2) a mixture of i) polymer B and ii) one or more selected from the group consisting of a metal, a metal oxide, and both a metal and a metal oxide.

The coating layer 320 may have ionic conductivity.

The coating layer may include a lithiophilic material, and a non-limiting example of the lithiophilic material may include one or more selected from the group consisting of a lithiophilic metal, a salt of the lithiophilic metal, an oxide of the lithiophilic metal, and a hydrate of the lithiophilic metal.

For example, the positive electrode 100 may be manufactured by applying a positive electrode mixture of a positive electrode active material constituted by positive electrode active material particles, a conductive agent, and a binder to the positive electrode current collector 110 to form the positive electrode active material layer 120. A filler may be further added to the positive electrode mixture as needed.

In general, the positive electrode current collector 110 is manufactured so as to have a thickness of 3 µm to 500 um. The positive electrode current collector 110 is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, or titanium. Alternatively, the positive electrode current collector may be made of aluminum or stainless steel, the surface of which is treated with carbon, nickel, titanium, or silver. Specifically, aluminum may be used. The current collector may have a micro-scale uneven pattern formed on the surface thereof so as to increase adhesive force of the positive electrode active material. The current collector may be configured in any of various forms, such as a film, a sheet, a foil, a net, a porous body, a foam body, and a non-woven fabric body.

In addition to the positive electrode active material particles, the positive electrode active material included in the positive electrode active material layer 120 may be constituted, for example, by a layered compound, such as lithium nickel oxide (LiNiO₂), or a compound substituted with one or more transition metals; a lithium manganese oxide represented by the chemical formula Li₁₊ₓMn₂₋ₓO₄ (where x = 0 to 0.33) or lithium manganese oxide, such as LiMnOa, LiMn₂O₃, or LiMnO₂; lithium copper oxide (Li₂CuO₂); vanadium oxide, such as LiV₃O₈, LiFe₃O₄, V₂O₅, or Cu₂V₂O₇; an Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₃ (where M = Fe, Co, Ni, Cu, or Zn); LiMn₂O₄ in which a portion of Li in the chemical formula is replaced by alkaline earth metal ions; a disulfide compound; or Fe₂(MoO₄)₃. However, the present invention is not limited thereto.

However, it is preferable to use a metal oxide including lithium or to include the same for the positive electrode active material used in the present invention in order to deposit lithium on the negative electrode 200.

The conductive agent is generally added so that the conductive agent accounts for 0.1 weight% to 30 weight% based on the total weight of the mixture including the positive electrode active material. The conductive agent is not particularly restricted as long as the conductive agent exhibits high conductivity without inducing any chemical change in a battery to which the conductive agent is applied. For example, graphite, such as natural graphite or artificial graphite; carbon black, such as carbon black, acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used as the conductive agent.

The binder, which is included in the positive electrode, is a component assisting in binding between the active material and the conductive agent and in binding with the current collector. The binder is generally added in an amount of 0.1 weight% to 30 weight% based on the total weight of the mixture including the positive electrode active material. As examples of the binder, there may be used polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylenepropylene-diene terpolymer (EPDM), sulfonated EPDM, styrene butadiene rubber, fluoro rubber, and various copolymers.

An organic solid electrolyte or an inorganic solid electrolyte may be used for the solid electrolyte layer 200. However, the present invention is not limited thereto.

For example, a polyethylene derivative, a polyethylene oxide derivative, a polypropylene oxide derivative, a phosphoric acid ester polymer, poly agitation lysine, polyester sulfide, polyvinyl alcohol, polyvinylidene fluoride, or a polymer containing an ionic dissociation group may be used as the organic solid electrolyte.

As an example, the inorganic solid electrolyte may be a sulfide-based solid electrolyte or an oxide-based solid electrolyte.

For example, a nitride or halide of Li, such as Li_{6.25}La₃Zr₂A_{10.25}O₁₂, Li₃PO₄, Li₃+xPO₄-xNₓ(LiPON), Li₃N, LiI, Li₅NI₂, Li₃N-LiI-LiOH, LiSiO₄, LiSiO₄-LiI-LiOH, Li₂SiS₃, Li₄SiO₄, or Li₄SiO₄-LiI-LiOH, may be used as the oxide-based solid electrolyte.

In the present invention, the sulfide-based solid electrolyte is not particularly restricted, and all known sulfide-based materials used in the field of lithium batteries may be employed. Products on the market may be used as the sulfide-based materials, or amorphous sulfide-based materials may be crystallized to manufacture the sulfide-based materials. For example, a crystalline sulfide-based solid electrolyte, an amorphous sulfide-based solid electrolyte, or a mixture thereof may be used as the sulfide-based solid electrolyte. There are a sulfur-halogen compound, a sulfur-germanium compound, and a sulfur-silicon compound as examples of available composite compounds. Specifically, a sulfide, such as SiS₂, GeS₂, or B₂S₃, may be included, and Li₃PO₄, halogen, or a halogen compound may be added. Preferably, a sulfide-based electrolyte capable of implementing a lithium ion conductivity of 10⁻⁴ S/cm or more is used.

Typically, Li₆PS₅Cl (LPSCl), Thio-LISICON(Li_{3.25}Ge_{0.25}P_{0.75}S₄), Li₂S-P₂S₅-LiCl, Li₂S-SiS₂, LiI-Li₂S-SiS₂, LiI-Li₂S-P₂S₅, LiI-Li₂S-P₂O₅, LiI-Li₃PO₄-P₂S₅, Li₂S-P₂S₅, Li₃PS₄, Li₇P₃S₁₁, LiI-Li₂S-B₂S₃, Li₃PO₄-Li₂S-Si₂S, Li₃PO₄-Li₂S-SiS₂, LiPO₄-Li₂S-SiS, Li₁₀GeP₂S₁₂, Li_{9.54}Si_{1.74}P_{1.44}S_{11.7}Cl_{0.3}, and Li₇P₃S₁₁ are included.

The negative electrode 300 according to the present invention may be configured to have a structure in which the coating layer 320 is disposed on at least one surface of the negative electrode current collector 310.

The negative electrode current collector 310 is generally manufactured so as to have a thickness of 3 µm to 500 um. The negative electrode current collector 310 is not particularly restricted, as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. In addition, the negative electrode current collector may have a micro-scale uneven pattern formed on the surface thereof so as to increase binding force of the negative electrode active material, in the same manner as the positive electrode current collector 110. The negative electrode current collector may be configured in any of various forms, such as a film, a sheet, a foil, a net, a porous body, a foam body, and a non-woven fabric body.

The coating layer 320 may be disposed so as to face at least the solid electrolyte layer 200 in the all-solid-state battery. In the case in which the coating layer 320 is disposed so as to face the solid electrolyte layer 200, the coating layer may protect the solid electrolyte layer 200 when lithium dendrites are formed on the negative electrode current collector 310.

The coating layer may include at least one of 1) and 2) below:
1) polymer A having ionic conductivity; and
2) a mixture of i) polymer B and ii) one or more selected from the group consisting of a metal, a metal oxide, and both the metal and the metal oxide.

In addition, the coating layer includes a lithiophilic material in addition to at least one of 1) and 2) .

All polymers may be used as the polymer A having ionic conductivity as long as operation of the battery is not disturbed thereby. The polymer A may include lithium ions. As an example, the polymer A may be formed by mixing a polymer, such as polyethylene oxide (PEO), polypropylene oxide (PPO), polyethylene glycol (PEG), polyvinyl alcohol (PVA), polyacrylamide (PAA), polypropylene carbonate (PPC), polyethylene carbonate (PEC), polyacrylonitrile (PAN), polymethyl methacrylate (PMMA), polymethyl ether acrylate (PMEA), a copolymer thereof, a sulfonated derivative thereof, a chemical derivative thereof, or a combination thereof, with a lithium salt or a lithium ion-conductive additive.

The polymer A may have a lithium ion conductivity of 10⁻⁵ S/cm or more, preferably 10⁻⁴ S/cm or more.

Any kind of polymer may be used as the polymer B as long as operation of the battery is not disturbed thereby. A polymer highly compatible with a metal may be used as the polymer B. The polymer B may include a material having a functional group including oxygen or nitrogen. As an example, the polymer B may be one or more selected from the group consisting of polyvinylidene fluoride (PVdF), polyethylene chlorotrifluoroethylene (ECTFE), polychlorotrifluoroethylene (PCTFE), polyvinylidene fluoride-co-hexafluoropropylene (PVdF-co-HFP), polybutyl methacrylate (PBMA), polyvinylpyrrolidone (PVP), carboxymethylcellulose (CMC), and styrene butadiene rubber (SBR).

Each of the polymer A and the polymer B may be made of a material that is elastic enough to relieve stress generated in the all-solid-state battery.

In addition, the coating layer 320 may include one or more selected from the group consisting of a metal, a metal oxide, and both the metal and the metal oxide in order to improve electrical conductivity and ionic conductivity. The kind of the metal is not limited as long as the metal enables lithium dendrites to be formed between the coating layer 320 and the negative electrode current collector 310 while improving performance of the negative electrode. The metal may be lithiophilic so as to induce lithium dendrites to be formed between the coating layer 320 and the negative electrode current collector 310.

Particularly, in the case in which polymer A is used, the metal may be uniformly distributed in the coating layer 320 in order to improve electrical conductivity of the coating layer 320, thereby improving electrical conductivity of the all-solid-state battery. To this end, the metal may be included so as to account for 10 weight% to 60 weight% based on the entire slurry composition of the coating layer 320 excluding a solvent.

In another construction, the lithiophilic metal may be disposed at the lower part of the coating layer 320, i.e. the surface of the coating layer that is adjacent to the negative electrode current collector 310, such that lithium dendrites do not grow in a direction toward the solid electrolyte layer 200. In the case in which the lithiophilic metal is disposed at the coating layer 320, lithium plating is performed on the lithiophilic metal, whereby a lithium nucleus is formed, and lithium dendrites grow from the lithium nucleus at only the coating layer 320.

One or more of a metal and a metal oxide may be selected as the lithiophilic material. For example, the metal may be gold (Au), silver (Ag), platinum (Pt), zinc (Zn), silicon (Si), or magnesium (Mg), and the metal oxide may be copper oxide, zinc oxide, or cobalt oxide, which is a nonmetal.

In addition, a solid electrolyte may be added to the coating layer 320 according to the present invention in order to balance between electrical conductivity and ionic conductivity. At this time, it is preferable for the coating layer 320 to have higher ionic conductivity than the solid electrolyte layer 200. In the case in which ionic conductivity of the coating layer 320 is higher than ionic conductivity of the solid electrolyte layer 200, lithium dendrites, i.e. a lithium layer 330, are formed under the coating layer 320, i.e. between the coating layer 320 and the negative electrode current collector 310, at the time of charging and discharging.

A weight mixing ratio of the polymer A and the polymer B to the lithiophilic material may be 30:70 to 90:10.

In the case in which too much of the polymer (including A and B) is used, ionic conductivity and electrical conductivity of the coating layer are reduced, whereby there is no difference in ionic conductivity and electrical conductivity between the coating layer 320 and the solid electrolyte layer 200. As a result, a separate coating layer 320 may be formed, and therefore lithium dendrites may not be formed at a desired place.

Also, in the case in which polymer B is used, the coating layer 320 according to the present invention may have a thickness of 100 nm to 10 µm. The reason for this is that, if the coating layer 320 is too thick, ionic conductivity of the negative electrode may be reduced, and if the coating layer 320 is too thin, it is difficult for the coating layer 320 to prevent damage to the solid electrolyte layer 200 due to lithium dendrites. The thickness of the coating layer 320 may vary depending on the content of metal in the coating layer 320 and whether a polymer having ionic conductivity is added. For polymer B, it is preferable for the coating layer to have a thin film thickness, since the polymer has no or low ionic conductivity.

In addition, for the coating layer 320 according to the present invention, a coating layer having each of 1) and 2) below as a coating layer composition may be separately formed:
1) polymer A having ionic conductivity; and
2) a mixture of i) polymer B and ii) one or more selected from the group consisting of a metal, a metal oxide, and both the metal and the metal oxide.

A method of forming the coating layer 320 is not particularly restricted. For example, the coating layer may be formed by immersing, spin coating, dip coating, spray coating, doctor blade coating, solution casting, drop coating, physical vapor deposition (PVD), or chemical vapor deposition (CVD) .

The coating layer also includes a lithiophilic material.

The coating layer 320 may have predetermined pores and may include the lithiophilic metal in the pores. In the case in which the coating layer 320 has pores, lithium dendrites are formed on the negative electrode current collector 310 through the pores, whereby the lithium dendrites do not react with the solid electrolyte layer 200.

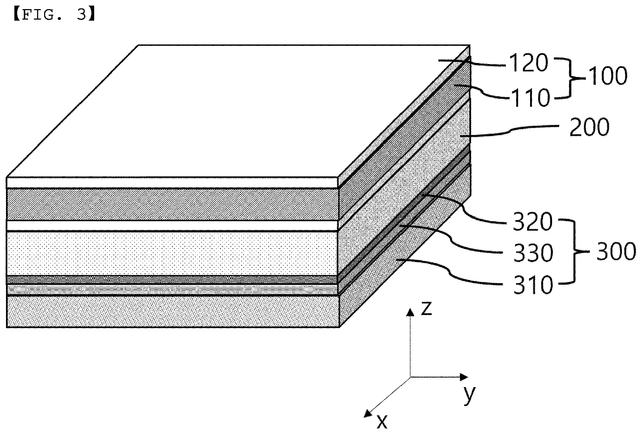

FIG. 3 is a schematic view of the all-solid-state battery according to the present invention after being charged and discharged.

As can be seen from FIG. 3, in the all-solid-state battery according to the present invention, lithium is deposited after being charged, whereby a lithium layer 330 is formed between the negative electrode current collector 310 and the coating layer 320. The lithium layer 330 is charged under constant current/constant voltage (CC/CV) conditions. At this time, pressing force F applied to the entirety of the lithium secondary battery may vary depending on the amount of lithium formed in the battery, charging and discharging speed, and charging and discharging time.

The lithium layer 330 is deposited on the negative electrode current collector 310 through the pores of the coating layer 320. At this time, the coating layer 320 may have predetermined elastic force, whereby it is possible to relieve stress generated due to formation of the lithium layer 330. In order to relieve stress, the pores in the coating layer 320 may be reduced, or the shape of the coating layer 320 may be changed.

Hereinafter, the present invention will be described based on Experimental Examples in which Examples according to the present invention and Comparative Examples according to the conventional art were compared with each other.

### <Example 1>

Polyethylene oxide (PEO) (Mw=1,000,000g/mol) was dissolved in acetonitrile (AN), as a solvent, to prepare a polymer solution of 4 weight%. At this time, LiTFSI, as a lithium salt, was added so as to have a molar ratio of [EO] / [Li⁺] =18/1. Stirring was performed at 70°C such that PEO and the lithium salt were sufficiently dissolved in the polymer solution.

The polymer solution and Ag nanoparticles were mixed with each other such that a weight ratio of the polymer solution excluding the solvent to the Ag nanoparticles is 80 weight%:20 weight%, and were stirred for a day. The mixed solution (slurry) was applied to a Ni foil by doctor blade coating and was then dried to manufacture a negative electrode coating layer having a thickness of 10 µm.

### <Example 2>

A negative electrode was manufactured in the same manner as in Example 1 except that a weight ratio of the polymer solution excluding the solvent to the Ag nanoparticles was 50 weight%:50 weight%.

### <Example 3>

A negative electrode was manufactured in the same manner as in Example 1 except that ZnO (10 nm to 30 nm) was used instead of the Ag nanoparticles of Example 1.

### <Comparative Example 1>

A negative electrode was manufactured using only Ni foil without a separate coating layer.

### <Comparative Example 2>

A negative electrode was manufactured in the same manner as in Example 1 except that a polymer solution not including the Ag nanoparticles was coated.

### <Comparative Example 3>

A negative electrode was manufactured in the same manner as in Example 1 except that a coating layer of Ag nanoparticles only without including the polymer solution.

### <Comparative Example 4>

A negative electrode was manufactured in the same manner as in Example 1 except that a weight ratio of the polymer solution excluding the solvent to the Ag nanoparticles was 20 weight%:80 weight%.

<Experimental Example 1: Measurement of ionic conductivity based on polymer A>

Ionic conductivity of Ag-PEO/LiTFSI was measured, and the results are shown in Table 1 below. Ionic conductivity was measured using the following method.

Only the coating layer according to each of Examples 1 and 2 and Comparative Examples 2 and 4 was cut so as to have a circular shape of 1.7671 cm² and was disposed between two sheets of stainless steel (SUS) to manufacture a coin cell.

Electrochemical impedance was measured under conditions of an amplitude of 10 mV and a scan range of 500 kHz to 20 MHz at 60°C using an analyzer (VMP3, Bio logic science instrument), and ionic conductivity was calculated based thereon.

**[Table 1]**

| | Ionic conductivity (S/cm @ 60°C) |
|---|---|
| Example 1 | 7.7E-05 |
| Example 2 | 7.5E-05 |
| Comparative Example 2 | 7.8E-05 |
| Comparative Example 4 | Not measurable |

It can be seen from Table 1 above that ionic conductivity of PEO/LiTFSI according to Comparative Example 2 is the highest, whereas Example 1 and Example 2 exhibit values similar to ionic conductivity of Comparative Example 2 even though the Ag nanoparticles are included. However, it can be seen that, when the content of Ag is high, as in Comparative Example 4, the Ag nanoparticles form a network, whereby an electric conduction channel is formed, and therefore ionic conductivity is not measurable.

### <Experimental Example 2: Characteristics of battery based on polymer A>

In Experimental Example 2, experiments were conducted on an all-solid-state battery including the following positive electrode, the following solid electrolyte layer, and the negative electrode according to each of Examples 1 to 3 and Comparative Examples 1 to 4.

The positive electrode was manufactured as follows. NCM811 (LiNi_{0.8}Co_{0.1}Mn_{0.1}O₂), as a positive electrode active material, argyrodite (Li₆PS₅Cl), as a solid electrolyte, carbon, as a conductive agent, and PTFE, as a binder, were dispersed in anisole in a weight ratio of 77.5:19.5:1.5:1.5, and were stirred to manufacture a positive electrode slurry. The positive electrode slurry was applied to an aluminum current collector having a thickness of 14 µm by doctor blade coating, and was dried in a vacuum state at 100°C for 12 hours to manufacture a positive electrode.

Argyrodite (Li₆PS₅Cl), as a solid electrolyte, and PTFE, as a binder, were dispersed and stirred in anisole in a weight ratio of 95:5 to manufacture a solid electrolyte layer slurry. The solid electrolyte layer slurry was applied to a PET release film by coating, and was dried in a vacuum state at 100°C for 12 hours to form a solid electrolyte layer.

The positive electrode, the solid electrolyte layer, and the negative electrode were sequentially stacked to manufacture a battery.

The battery was tested by 0.5C charging/1.0C discharging in a voltage range of 4.5 V to 2.5 V, and the number of cycles after which short circuit occurred was checked. The results are shown in Table 2 below.

**[Table 2]**

| | Number of cycles after which short circuit occurred |
|---|---|
| Example 1 | 15 |
| Example 2 | 13 |
| Example 3 | 12 |
| Comparative Example 1 | 2 |
| Comparative Example 2 | 5 |
| Comparative Example 3 | 7 |
| Comparative Example 4 | 4 |

It can be seen from Table 2 above that, when the coating layer according to the present invention is formed, lifespan characteristics are superior than Comparative Example 1, in which a current collector not having the coating layer according to the present invention is used. In addition, it can be seen that lifespan is longer than Comparative Example 2 and Comparative Example 3, in which only the lithiophilic particles or only the polymer solid electrolyte layer is used. It can be seen that Comparative Example 4, in which the content of Ag particles is high, has lower lifespan characteristics than Comparative Examples 2 and 4. The reason for this is that, in Comparative Example 4, the content of Ag particles is high, whereby the coating layer is electrically connected, and therefore electrons are concentrated on the Ag particles exposed on the coating layer, with the result that the point in time at which short circuit occurs is brought forward.

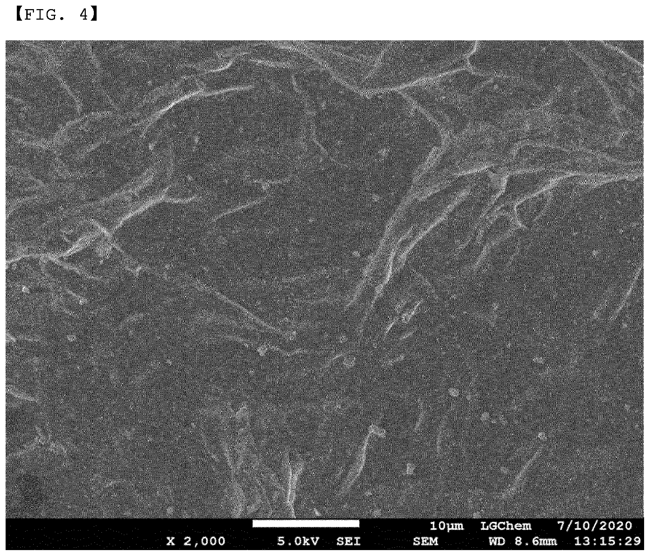

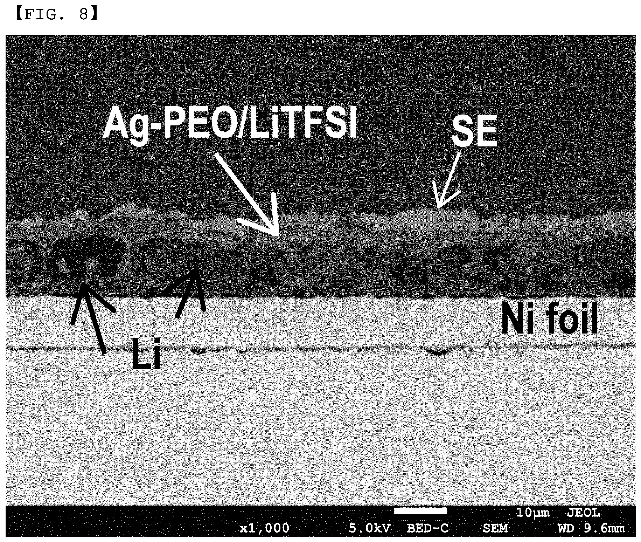

FIG. 4 is a SEM photograph of the Ag-PEO/LiTFSI coating layer according to Example 1, and FIG. 8 is a sectional SEM photograph of an all-solid-state battery including the Ag-PEO/LiTFSI coating layer according to Example 1 after being charged once.

It can be seen from FIG. 4 that the coating layer according to the present invention has high lithium ion conductivity and the lithiophilic material in the coating layer assists transfer of lithium ions toward the current collector. As a result, overpotential is reduced at the time of forming a seed, whereby lifespan of the battery including the same is increased.

It can be seen from FIG. 8 that, in the negative electrode according to the present invention, lithium is uniformly plated under the coating layer and above the current collector at the time of charging and discharging. The reason for this seems to be that the coating layer inhibits growth of lithium dendrites as the result of analysis. It is understood that the coating layer has lithium ion conductivity, and the lithiophilic material assists transfer of Li ions toward the current collector, whereby overpotential is reduced at the time of forming a seed. Consequently, it can be seen that the coating layer reduces overpotential while assisting in transfer of lithium ions, thereby preventing short circuit of the separator.

### <Experimental Example 3: Measurement of ionic conductivity based on polymer B>

Ionic conductivity based on polymer B was measured, and the results are shown in Table 3 below. Ionic conductivity was measured using the following method.

A coating layer manufactured according to each of the following manufacturing examples was cut so as to have a circular shape of 1.7671 cm². Argyrodite (Li₆PS₅Cl), as a solid electrolyte, was put into a titanium mold having a diameter of 2 cm, and primary molding was performed to manufacture a pellet. Subsequently, the coating layer according to each of Manufacturing Example 1 to Manufacturing Example 7 below was stacked on each of the upper end and the lower end of the pellet, and the stack was disposed between two sheets of stainless steel (SUS) to manufacture a jig cell.

In Manufacturing Example 8, the pellet was manufactured using only the coating layer.

Electrochemical impedance was measured under conditions of an amplitude of 10 mV and a scan range of 500 kHz to 20 MHz at 23°C using an analyzer (VMP3, Bio logic science instrument), and ionic conductivity was calculated based thereon.

### <Manufacturing Example 1>

No separate coating layer was manufactured.

### <Manufacturing Example 2>

Ag nanoparticles (20 nm, US Research Nanomaterials, Inc.) and polyvinylpyrrolidone were uniformly dispersed in NMP at a ratio of 20 wt%:80 wt%. Subsequently, the mixture was applied to a nickel current collector by coating, and was dried to form a coating layer having a thickness of 30 um. In the weight ratio, the weight of polyvinylpyrrolidone is the weight of the polymer itself only.

### <Manufacturing Example 3>

A coating layer was manufactured in the same manner as in Manufacturing Example 2 except that the thickness of the coating layer was 10 µm.

### <Manufacturing Example 4>

A coating layer was manufactured in the same manner as in Manufacturing Example 2 except that the thickness of the coating layer was 5 µm.

### <Manufacturing Example 5>

A coating layer was manufactured in the same manner as in Manufacturing Example 2 except that the thickness of the coating layer was 1 µm.

### <Manufacturing Example 6>

A coating layer was manufactured in the same manner as in Manufacturing Example 4 except that a weight ratio of the Ag nanoparticles to polyvinylpyrrolidone was 50 wt%:50 wt%. The weight of polyvinylpyrrolidone is the weight of the polymer itself only.

### <Manufacturing Example 7>

A coating layer was manufactured in the same manner as in Manufacturing Example 4 except that a weight ratio of the Ag nanoparticles to polyvinylpyrrolidone was 80 wt%:20 wt%. The weight of polyvinylpyrrolidone is the weight of the polymer itself only.

### <Manufacturing Example 8>

A pellet was manufactured using only the coating layer according to Manufacturing Example 1 without using the argyrodite (Li₆PS₅Cl) pellet.

**[Table 3]**

| | Thickness of coating layer (um) | Ionic conductivity (S/cm @ 23°C) |
|---|---|---|
| Manufacturing Example 1 | 0 | 1.9E-03 |
| Manufacturing Example 2 | 30 | 9.8E-05 |
| Manufacturing Example 3 | 10 | 2.7E-04 |
| Manufacturing Example 4 | 5 | 3.3E-04 |
| Manufacturing Example 5 | 1 | 1.0E-03 |
| Manufacturing Example 6 | 5 | 3.4E-04 |
| Manufacturing Example 7 | 5 | Not measurable |
| Manufacturing Example 8 | 30 | Not measurable |

As can be seen from Table 3 above, ionic conductivity of the case in which the solid electrolyte alone is used without a coating layer (Manufacturing Example 1) is the highest. It can be seen that ionic conductivity of Manufacturing Example 2, in which the thickest coating layer is used, is the lowest and that the thickness of the coating layer suitable to manufacture the cell is 10 µm or less. Also, it can be seen that, in the case in which the content of Ag is increased up to 50 weight% (Manufacturing Example 6), similar ionic conductivity is exhibited. However, it can be seen that, in the case in which the content of Ag is 80 weight% (Manufacturing Example 7), the Ag nanoparticles form a network, whereby an electric conduction channel is formed, and therefore ionic conductivity is not measurable. In the case in which the coating layer alone is used, as in Manufacturing Example 8, there is no lithium (Li) source, and therefore ionic conductivity is not measurable.

### <Experimental Example 4: Characteristics of battery based on polymer B>

In Experimental Example 4, experiments were conducted on an all-solid-state battery including the following positive electrode, the following solid electrolyte layer, and the negative electrode according to each of Manufacturing Examples above. At this time, Manufacturing Example 2 and Manufacturing Example 4 were applied to the negative electrode in order to check the effect of the thickness factor with reference to the results of Experimental Example 3, and Manufacturing Example 6 was applied to the negative electrode in order to check the effect of the content

### <Example 4>

A cell was manufactured using the coating layer manufactured according to Manufacturing Example 4.

The positive electrode was manufactured as follows. NCM811 (LiNi_{0.8}Co_{0.1}Mn_{0.1}O₂), as a positive electrode active material, argyrodite (Li₆PS₅Cl), as a solid electrolyte, carbon, as a conductive agent, and PTFE, as a binder, were dispersed in anisole in a weight ratio of 77.5:19.5:1.5:1.5, and were stirred to manufacture a positive electrode slurry. The positive electrode slurry was applied to an aluminum current collector having a thickness of 14 µm by doctor blade coating, and was dried in a vacuum state at 100°C for 12 hours to manufacture a positive electrode.

Argyrodite (Li₆PS₅Cl), as a solid electrolyte, and PTFE, as a binder, were dispersed in anisole in a weight ratio of 95:5, and were stirred to manufacture a solid electrolyte layer slurry. The solid electrolyte layer slurry was applied to a PET release film by coating, and was dried in a vacuum state at 100°C for 12 hours to form a solid electrolyte layer.

The positive electrode, the solid electrolyte layer, and the negative electrode were sequentially stacked to manufacture a battery.

The battery was tested by 0.1C charging/0.1C discharging in a voltage range of 4.2 V to 3.7 V at 60°C, and the number of cycles after which short circuit occurred was checked. The results are shown in Table 4 below.

### <Example 5>

A battery was manufactured and evaluated in the same manner as in Example 4 except that the coating layer manufactured according to Manufacturing Example 6 was used.

### <Example 6>

A battery was manufactured and evaluated in the same manner as in Example 4 except that AgNOs was used instead of Ag nanoparticles.

### <Example 7>

A battery was manufactured and evaluated in the same manner as in Example 4 except that ZnO (10 nm to 30 nm) was used instead of Ag nanoparticles.

### <Comparative Example 5>

A battery was manufactured and evaluated in the same manner as in Example 4 except that only nickel foil was used without a coating layer.

### <Comparative Example 6>

A battery was manufactured and evaluated in the same manner as in Example 4 except that there were no Ag particles in a coating layer, i.e. the coating layer was formed using polypyrrolidone only.

### <Comparative Example 7>

A battery was manufactured and evaluated in the same manner as in Example 4 except that the coating layer manufactured according to Manufacturing Example 2 was used.

**[Table 4]**

| | Point in time at which short circuit occurred (Number of cycles) |
|---|---|
| Example 4 | 12 |
| Example 5 | 13 |
| Example 6 | 10 |
| Example 7 | 15 |
| Comparative Example 5 | 2 |
| Comparative Example 6 | 1 |
| Comparative Example 7 | 3 |

It can be seen from Table 4 above that, when the coating layer according to the present invention is formed, lifespan characteristics are superior than Comparative Example 5, in which the current collector having no coating layer is used. In addition, it can be seen that lifespan is longer than Comparative Example 6, in which only the polymer layer is used. However, it can be seen that, when the coating layer is thick, as in Comparative Example 7, ionic conductivity is low, whereby resistance is increased, and therefore the effect of improving lifespan characteristics is not achieved, and that an appropriate thickness (100 nm to 10 µm) of the coating layer is effective in lifespan extension and is preferable. Meanwhile, it can be seen that, even when a salt (Example 6) or a metal oxide (Example 7) such as ZnO is used as the lithiophilic material, besides, the Ag metal particles, the effect of improved lifespan is also achieved.

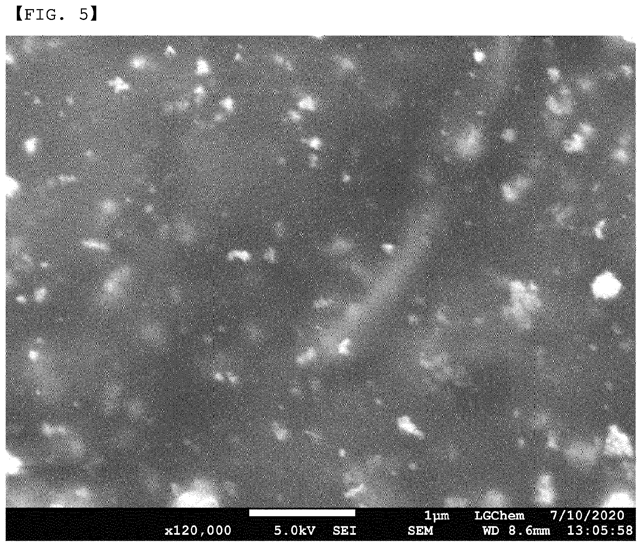

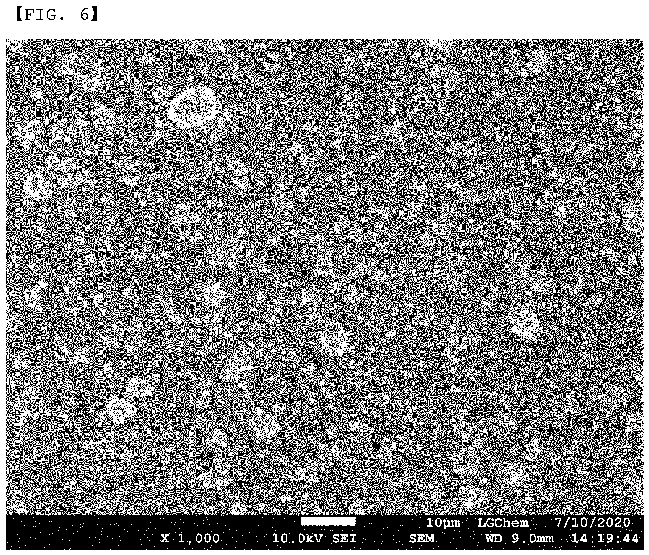

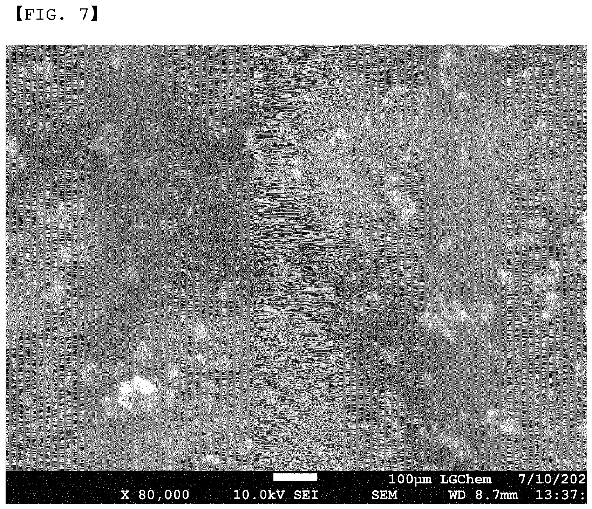

FIG. 5 is a SEM photograph of the coating layer manufactured according to Manufacturing Example 4 (Example 4) of the present invention, FIG. 6 is a SEM photograph of the coating layer manufactured according to Manufacturing Example 6 (Example 5) of the present invention, and FIG. 7 is an SEM photograph of the coating layer manufactured according to Example 7 of the present invention.

It can be seen from FIGs. 5 to 7 that the coating layer according to the present invention has lithium ion conductivity and the lithiophilic material in the coating layer assists transfer of lithium ions toward the current collector. As a result, overpotential is reduced at the time of forming a seed, whereby lifespan of the battery including the same is increased.

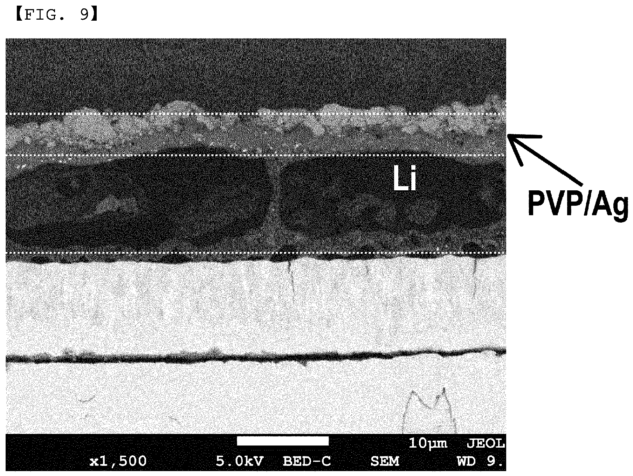

FIG. 9 is a sectional SEM photograph of an all-solid-state battery having the coating layer according to Example 4 of the present invention applied thereto after being charged once.

It can be seen from FIG. 9 that, in the negative electrode according to the present invention, lithium is uniformly plated under the coating layer and above the current collector at the time of charging and discharging. The reason for this seems to be that the coating layer inhibits growth of lithium dendrites as the result of analysis. It is understood that the coating layer has lithium ion conductivity, and the lithiophilic material assists transfer of Li ions toward the current collector, whereby overpotential is reduced at the time of forming a seed. Consequently, it can be seen that the coating layer reduces overpotential while assisting in transferring lithium ions, thereby preventing short circuit of the separator.

In addition, the present invention provides a battery module including the all-solid-state battery, a battery pack, and a device including the battery pack. The battery pack and the device are well known in the art to which the present invention pertains, and thus a detailed description thereof will be omitted.

For example, the device may be a laptop computer, a netbook computer, a tablet PC, a mobile phone, an MP3 player, a wearable electronic device, a power tool, an electric vehicle (EV), a hybrid electric vehicle (HEV), a plug-in hybrid electric vehicle (PHEV), an electric bicycle (E-bike), an electric scooter (E-scooter), an electric golf cart, or an energy storage system. However, the present invention is not limited thereto.

Those skilled in the art to which the present invention pertains will appreciate that various applications and modifications are possible within the category of the present invention based on the above description.

### (Description of Reference Numerals)

10, 100: Positive electrodes
11, 110: Positive electrode current collectors
12, 120: Positive electrode active material layers
20, 200: Solid electrolyte layers
30, 300: Negative electrodes
31, 310: Negative electrode current collectors
32: Negative electrode active material layer
320: Coating layer
330: Lithium layer
F: Pressing force

### [Industrial Applicability]

The present invention relates to a negative electrode for all-solid-state batteries including a polymer layer configured to prevent microscopic short circuit and an all-solid-state battery including the same, and therefore the present invention has industrial applicability.

## Claims

1. A negative electrode for all-solid-state batteries, the negative electrode comprising a negative electrode current collector and a coating layer disposed on at least one surface of the negative electrode current collector, wherein
the coating layer comprises at least one of 1) and 2) below:
1) polymer A having ionic conductivity; and
2) a mixture of i) polymer B and ii) one or more selected from the group consisting of a metal, a salt of the metal, an oxide of the metal, and a hydrate of the metal.

2. The negative electrode according to claim 1, wherein the coating layer has ionic conductivity.

3. The negative electrode according to claim 1, wherein the coating layer comprises a lithiophilic material.

4. The negative electrode according to claim 3, wherein the lithiophilic material comprises one or more selected from the group consisting of a lithiophilic metal, a salt of the lithiophilic metal, an oxide of the lithiophilic metal, and a hydrate of the lithiophilic metal.

5. The negative electrode according to claim 1, wherein the polymer A comprises a lithium ion.

6. The negative electrode according to claim 1, wherein the polymer B comprises a functional group comprising oxygen or nitrogen, the functional group highly compatible with the metal.

7. The negative electrode according to claim 1, wherein the metal is lithiophilic.

8. The negative electrode according to claim 1, wherein the coating layer further comprises a solid electrolyte.

9. The negative electrode according to claim 3, wherein a weight mixing ratio of both the polymer A and the polymer B to the lithiophilic material is 30:70 to 90:10.

10. The negative electrode according to claim 1, wherein the coating layer has a thickness of 100 nm to 10 um.

11. An all-solid-state battery comprising the negative electrode according to any one of claims 1 to 10.

12. The all-solid-state battery according to claim 11, wherein lithium is deposited between the coating layer and the negative electrode current collector after initial charging and discharging of the all-solid-state battery.

13. The all-solid-state battery according to claim 11, wherein the coating layer is disposed so as to face a solid electrolyte layer.
